# EUROPÄISCHE PATENTSCHRIFT

(11) **EP 1 513 717 B1**
(45) Veröffentlichungstag und Bekanntmachung des Hinweises auf die Patenterteilung: **18.10.2006**
(21) Anmeldenummer: 03759852.1
(22) Anmeldetag: 12.06.2003
(51) Int. Cl.: B62D 1/18

(54) **SICHERHEITSVORRICHTUNG ZUM ARRETIEREN EINES VERSTELLBAREN ANSCHLUSSTEILS**
SECURING DEVICE FOR LOCKING AN ADJUSTABLE CONNECTING PART
DISPOSITIF DE SECURITE POUR BLOQUER UN ELEMENT DE RACCORDEMENT REGLABLE

(30) Priorität: 14.06.2002 DE 10226769
(43) Veröffentlichungstag der Anmeldung: 16.03.2005
(73) Patentinhaber: ZF Lenksysteme Nacam GmbH, 28259 Bremen (DE)
(72) Erfinder: SCHÄFER, Burkhard, 27777 Ganderkesee (DE)
(86) Internationale Anmeldenummer: PCT/DE2003/001976
(87) Internationale Veröffentlichungsnummer: WO 2003/106243

(56) Entgegenhaltungen:
- DE-C1- 19 506 210
- US-A- 5 941 130
- PATENT ABSTRACTS OF JAPAN Bd. 2000, Nr. 25, 12. April 2001 (2001-04-12) & JP 2001 233222 A (KOYO SEIKO CO LTD), 28. August 2001 (2001-08-28)

## Beschreibung

Die vorliegende Erfindung betrifft eine Sicherheitsvorrichtung zum Arretieren eines verstellbaren Anschlussteils, insbesondere eines Mantelrohres einer Lenksäule eines Kraftfahrzeuges, mit mindestens einem ersten Lagerteil, welches mindestens eine Durchgangsöffnung zur Führung eines Verbindungsstücks aufweist, das mindestens zwei zueinander bewegliche Klemmteile verbindet, welche das Anschlussteil klemmen, wobei das Verbindungsstück und die Klemmteile einen ersten Klemmmechanismus bilden und Mittel zur Sicherung des Klemmmechanismus vorgesehen sind.

Derartige Sicherheitsvorrichtungen kommen unter anderem in Kraftfahrzeugen in Verbindung mit der Verstelleinrichtung einer verstellbaren Lenksäule zur Vermeidung von Sicherheitsrisiken vor.

Aufgrund ergonomischer und sicherheitstechnischer Gegebenheiten sind Bedienelemente, beispielsweise Lenkrad, und andere Einrichtungen eines Kraftfahrzeuges (Sitz, Spiegel) entsprechend den individuellen Bedürfnissen des Fahrgastes einstellbar. Damit diese Bedienelemente wie Lenkrad oder Sitz sich nicht während des Betriebes selbsttätig verstellen und somit ein erhöhtes Sicherheitsrisiko darstellen, bedarf es entsprechender Arretier- oder Klemmvorrichtungen. Darüber hinaus bauen einige Sicherheitselemente auf verstellbaren Bedienelementen auf, wie zum Beispiel ein Fahrer-Airbag in einem Lenkrad, das mit einer verstellbaren Lenksäule verbunden ist. Um die entsprechende Sicherheitsfunktion beispielsweise eines Airbags zu gewährleisten, muss sichergestellt sein, dass diese Sicherheitselemente den auftretenden Belastungen stand halten. So ist ein Sicherheitselement, wie zum Beispiel ein Airbag, darauf ausgelegt, dass die ihn unterstützende Konstruktion im Sicherheitsfall, wie zum Beispiel bei einem Aufprallunfall, nicht nachgibt.

Aus der Patentschrift DE 195 06 210 C1 ist eine Klemmvorrichtung bekannt, welche als zusätzlichen Klemmmechanismus ein Sperrglied mit Schwertkante besitzt. Bei benötigter Sicherheitsfunktion drückt dieses Sperrglied mit der Schwertkante gegen die Innenfläche des Anschlussteils, beispielsweise eines Mantelrohres, und bietet somit eine kraftschlüssige Klemmfunktion. Bei höheren Belastungen kann sich die Schwertkante in die Oberfläche des Anschlussteils eingraben und somit zusätzlich eine erhöhte Klemmwirkung erzeugen.

Bei den bekannten Klemmvorrichtungen bzw. Sicherheitsvorrichtungen tritt der Nachteil auf, dass im Falle einer reibungsgeklemmten Sicherheitsvorrichtung die hohen, impulsartigen Belastungen bei einem Aufprallunfall nicht zuverlässig durch die Klemmvorrichtung abgefangen werden und es somit zu einer Lageveränderung der Lenksäule kommt (sogenanntes negatives Crashverhalten). Im Falle einer formschlüssigen Sicherheitsvorrichtung werden die oben genannten Belastungen zwar abgefangen, so dass es hierbei nicht zu einer Lageveränderung der Lenksäule kommt, jedoch ist hierbei eine stufenlose, individuelle Einstellung aufgrund der Teilung der Sicherheitsvorrichtung nicht mehr möglich. Zudem lässt sich eine "Kopf-auf-Kopf" - Stellung bei einer über Verzahnungen gelösten Klemmung nicht komplett verhindern, was bei einer impulsartigen Belastung ebenfalls zu einem Durchrutschen führt.

Es ist daher Aufgabe der vorliegenden Erfindung, eine Vorrichtung zu schaffen, bei der die stufenlose, individuelle Einstellung eines Anschlussteils gewährleistet wird und die die bei einem Aufprallunfall auftretenden Belastungen zuverlässig auffängt, ohne dass sich eine Lageveränderung des Anschlussteils ergibt, sodass damit eine einwandfreie Funktion der auf dieser Sicherheitsfunktion aufbauenden Sicherheitseinrichtungen - wie zum Beispiel eines Airbags - sicherstellt ist.

Diese Aufgabe wird ausgehend von einer Vorrichtung gemäß dem Oberbegriff des Anspruchs 1 in Verbindung mit dessen kennzeichnenden Merkmalen gelöst. Vorteilhafte Weiterbildungen der Erfindung sind in den abhängigen Ansprüchen angegeben.

Die Erfindung schließt die technische Lehre ein, dass die Mittel zur Arretierung des Klemmmechanismus einen zweiten, zwischen den Klemmteilen des ersten Klemmmechanismus befindlichen und mit diesem gekoppelten Klemmmechanismus umfasst, der mindestens ein zweites Lagerteil, welches eine zu der Durchgangsöffnung des ersten Lagerteils mindestens deckungsgleiche Durchgangsöffnung aufweist, und eine Spindel umfasst, die über ein als Spindelmutter ausgebildetes Klemmteil des ersten Klemmmechanismus mit dem ersten Klemmmechanismus verbunden ist, so dass beide Klemmmechanismen über den ersten Klemmmechanismus lösbar oder arretierbar sind.

Die erfindungsgemäße Lösung bietet den Vorteil, dass aufgrund der Kombination der zwei verschiedenen Prinzipien des Klemmens ― dem kraftschlüssigen und dem formschlüssigen Klemmen - die Vorteile beider Prinzipien vereint und damit eine höhere Sicherheitsfunktion und ein höherer Komfort für den Benutzer erreicht werden.

Vorzugsweise ist das erste Lagerteil als eine mit einem U-förmigen Teil ausgebildete Konsole gestaltet, da so eine günstigere Kräfteverteilung und eine einfachere Montage gewährleistet wird, wobei der Konsolenkörper gegossen oder aus Blech geformt werden kann.

Von Vorteil ist es, dass das Verbindungsstück als Klemmbolzen mit einem als Spindelmutter ausgeformten Kopf ausgebildet ist, da so eine einfache Klemmverbindung realisiert werden kann.

Die längliche Durchgangsöffnung des ersten Lagers kann als ein in Verstellrichtung ausgeformtes Langloch ausgebildet sein, so dass eine einfach zu fertigende Führungsmöglichkeit realisiert werden kann.

Ein weiterer Vorteil ist, das Klemmteil als mehrteiliges Klemmteil mit einem Hebel auszubilden, wodurch dieses in die im Stand der Technik bekannten Klemmmechanismen einsetzbar wäre.

Eine weitere, die Erfindung verbessernde Maßnahme besteht darin, dass das Lagerteil des zweiten Klemmmechanismus als Joch ausgebildet ist, so dass die Spindel axial und radial geführt ist und somit eine zuverlässigere Klemmung gewährleistet werden kann.

Vorzugsweise ist die Spindelsteigung derart bemessen, dass aufgrund der gewählten Spindelsteigung eine Selbsthemmung erzielt wird und somit eine Sicherheitsfunktion gewährleistet ist.

Vorzugsweise ist das Anschlussteil als Mantelrohr mit einem angeschweißten U-förmigen Träger, welcher an jedem Schenkel ein Durchgangsloch zur Verbindung mit dem als Verbindungsbolzen ausgeführten Verbindungsstück aufweist, ausgebildet, da so eine einfache Verstellmöglichkeit bei einer besseren Kraftverteilung gewährleistet wird.

Weitere, die Erfindung verbessernde Maßnahmen sind in den Unteransprüchen angegeben oder werden nachstehend gemeinsam mit der Beschreibung eines bevorzugten Ausführungsbeispiels der Erfindung anhand der Figuren näher dargestellt. Es zeigt:
- Fig. 1: eine isometrische Prinzipdarstellung eines erfindungsgemäßen ersten Lagerteils,
- Fig. 2: eine isometrische Prinzipdarstellung eines erfindungsgemäßen Anschlussteils, welches als Mantelrohr einer Kraftfahrzeuglenksäule ausgebildet ist,
- Fig. 3: einen Querschnitt einer Prinzipdarstellung einer erfindungsgemäßen kraftschlüssigen Klemmvorrichtung ohne einen zweiten Klemmmechanismus,
- Fig. 4: einen Querschnitt einer Prinzipdarstellung einer erfindungsgemäßen Kombination von kraft- und formschlüssigem Klemmmechanismus,

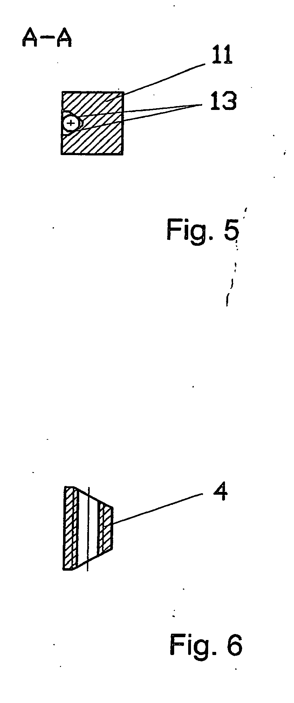

- Fig. 5: einen Schnitt entlang der Schnittlinie A-A in Fig. 4, und
- Fig. 6: eine Detailansicht der Fig. 4.

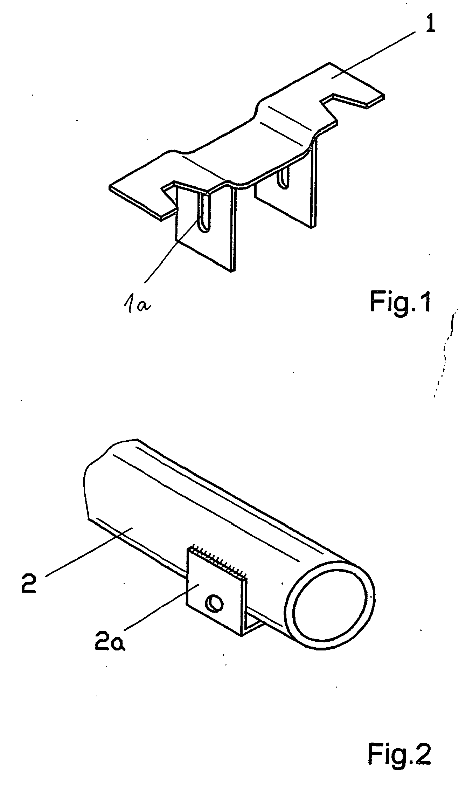

Der Lenksäulenkonsolenkörper 1 nach Fig. 1 ist U-förmiger Art und weist je Schenkel ein Langloch 1a auf, das zur Führung des Verbindungsstücks des ersten Klemmmechanismus dient und eine Verstellmöglichkeit gewährleistet. Der Körper ist hier aus Blech gebogen.

Fig. 2 zeigt eine an einem Mantelrohr 2, welches die komplette Lenkwelle samt Lagerung und angrenzender Bauteile (nicht dargestellt) aufnimmt, angeschweißte Befestigungsvorrichtung 2a, welche zwei Bohrungen zur Aufnahme zwischen den Klemmteilen des ersten Klemmmechanismus aufweist.

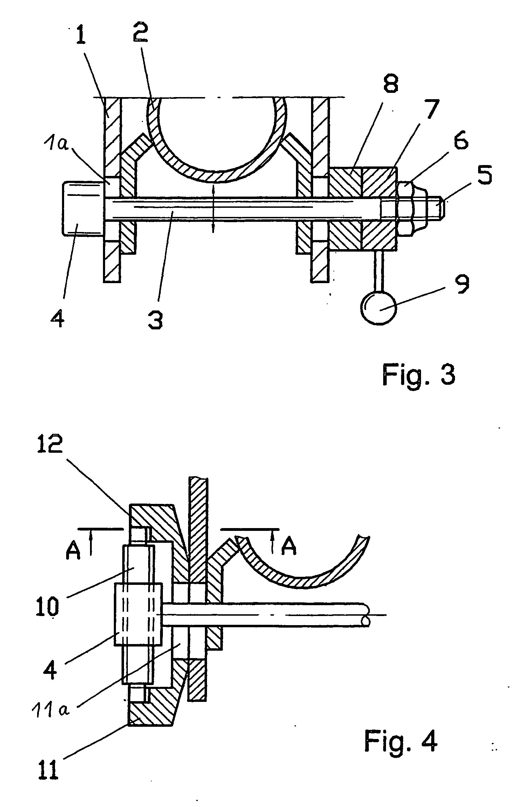

Der Klemmmechanismus nach Fig. 3 besteht aus einem Verbindungsbolzen 3 mit Kopf 4, welcher ein Gewinde 5 auf der dem Kopf abgelegenen Bolzenseite zur Einstellung einer selbstsichernden Einstellmutter 6 aufweist. Zwischen dem rechten Schenkel der Befestigungsvorrichtung 2a des Mantelrohres 2 und der Einstellmutter 6 befinden sich die als Stufenscheibe, Nadelmechanismus oder Gewindesteigung ausgebildeten Klemmteile 7, 8 mit einem Hebel 9, der durch Schwenken um die Bolzenachse eine Hubbewegung zwischen den Klemmteilen 7, 8 erzeugt und somit den Klemmmechanismus löst beziehungsweise arretiert.

In Fig. 4 ist eine Spindel 10 zu sehen, bei der der Kopf 4 als Spindelmutter ausgebildet ist. Die Spindel 10 wird über den Klemmmechanismus aus Fig. 3 axial und radial in der im Schnitt A-A deutlicher zu sehenden Jochfläche 12, 13 verklemmt. Das Joch 11 verhindert eine axiale Verstellung der Spindel. Die längliche Öffnung des Joches 11 entspricht der in Fig. 1 dargestellten Durchgangsöffnung 1a der Lenksäulenkonsole 1. Bei Verstellung der Lenksäule ist der Klemmmechanismus in Fig. 3 und damit auch der Klemmmechanismus in Fig. 4 geöffnet und ermöglicht so eine axiale Verstellung. Bei diesem Verstellvorgang bewegt sich der Klemmbolzenkopf 4 axial, wobei die Spindel 10 während dieser Bewegung rotiert. Der gesamte Verstellvorgang lässt sich auch so denken, dass nach Lösung der Verklemmung des Klemmmechanismus in Fig. 3 die Spindel 10 eine Drehung, beispielsweise über einen Elektromotor (nicht dargestellt) erfährt. Diese Drehung wird über den Kopf 4 in eine in axiale Richtung erfolgende Translation übersetzt und somit die Lenksäule verstellt.

### Bezugszeichenliste

- **1**: Lagerteil
- **1a**: Durchgangsöffnung
- **2**: Anschlussteil
- **2a**: Befestigungsvorrichtung
- **3**: Verbindungsstück
- **4**: Linkes Klemmteil (Bolzenkopf)
- **5**: Gewinde
- **6**: Selbstsichernde Einstellmutter
- **7**: Erstes Klemmteil
- **8**: Zweites Klemmteil
- **9**: Hebel
- **10**: Spindel
- **11**: Lagerteil (Joch)
- **12**: Axiale Führung
- **13**: Radiale Führung

## Patentansprüche

1. Sicherheitsvorrichtung zum Arretieren eines verstellbaren Anschlussteils, insbesondere eines Mantelrohres einer Lenksäule eines Kraftfahrzeuges mit mindestens einem ersten Lagerteil (1), welches mindestens eine Durchgangsöffnung (1a) zur Führung eines Verbindungsstückes (3) aufweist, das mindestens zwei zueinander bewegliche Klemmteile (4, 7) miteinander verbindet, welche das Anschlussteil (2) klemmen, wobei das Verbindungsstück (3) und die Klemmteile (4, 7) einen ersten Klemmmechanismus bilden und femer Mittel zur Sicherung des ersten Klemmmechanismus vorgesehen sind,
**dadurch gekennzeichnet,**
**dass** die Mittel zur Sicherung des ersten Klemmmechanismus (3, 4, 7) einen zweiten, zwischen den Klemmteilen (4, 7) des ersten Klemmmechanismus befindlichen und mit diesem gekoppelten Klemmmechanismus (10, 11) umfassen, wobei der zweite Klemmmechanismus mindestens ein zweites Lagerteil (11), welches eine zu der Durchgangsöffnung (1a) des ersten Lagerteils (1) mindestens deckungsgleiche Durchgangsöffnung (11a) aufweist und eine Spindel (10) umfasst, die über ein als Spindelmutter ausgebildetes Klemmteil (4) des ersten Klemmmechanismus (3, 4, 7) mit dem ersten Klemmmechanismus (3, 4, 7) verbunden ist, so dass beide Klemmmechanismen (3, 4, 7; 10, 11) über den ersten Klemmmechanismus (3, 4, 7) lösbar oder arretierbar sind.

2. Sicherheitsvorrichtung zum Arretieren eines verstellbaren Anschlussteils nach Anspruch 1, **dadurch gekennzeichnet,**
**dass** das erste Lagerteil (1) als eine mit einem U-förmigen Teil ausgebildete Konsole gestaltet ist, deren Schenkel zur Aufnahme eines Anschlussteils (2) über eine Befestigungsvorrichtung (2a) je ein Langloch aufweisen.

3. Sicherheitsvorrichtung zum Arretieren eines verstellbaren Anschlussteils nach Anspruch 1, **dadurch gekennzeichnet,**
**dass** das Verbindungsstück (3) ein Klemmbolzen mit einem als Spindelmutter ausgebildeten Kopf ist.

4. Sicherheitsvorrichtung zum Arretieren eines verstellbaren Anschlussteils nach einem der vorstehend genannten Ansprüche, **dadurch gekennzeichnet,**
**dass** die längliche Durchgangsöffnung (1a) des ersten Lagers ein in Verstellrichtung ausgeformtes Langloch ist. '

5. Sicherheitsvorrichtung zum Arretieren eines verstellbaren Anschlussteils nach einem der vorstehend genannten Ansprüche, **dadurch gekennzeichnet,**
**dass** ein Klemmteil (7) als mehrteiliges Klemmteil mit einem Hebel (9) ausgebildet ist.

6. Sicherheitsvorrichtung zum Arretieren eines verstellbaren Anschlussteils nach Anspruch 5, **dadurch gekennzeichnet,**
**dass** die mehrteiligen Klemmteile (6, 7, 8, 9) als Stufenscheiben ausgebildet sind, wobei der Hebel (9) bei Rotation um die Achse des Verbindungsstückes (3) in Kombination mit den Klemmteilen einen in axialer Richtung zu dem Verbindungsteil gerichteten Hub erzeugt, welcher die Klemmung realisiert.

7. Sicherheitsvorrichtung zum Arretieren eines verstellbaren Anschlussteils nach Anspruch 5, **dadurch gekennzeichnet,**
**dass** die mehrteiligen Klemmteile (6, 7, 8, 9) als Nadelmechanismus ausgebildet sind, wobei der Hebel (9) bei Rotation um die Achse des Verbindungsstückes (3) in Kombination mit den Klemmteilen einen in axialer Richtung zu dem Verbindungsteil gerichteten Hub erzeugt, welcher die Klemmung realisiert.

8. Sicherheitsvorrichtung zum Arretieren eines verstellbaren Anschlussteils nach Anspruch 5, **dadurch gekennzeichnet,**
**dass** die Klemmteile (6, 7, 8, 9) als Gewindesteigung ausgebildet sind, wobei der Hebel (9) bei Rotation um die Achse des Verbindungsstückes (3) in Kombination mit den Klemmteilen einen in axialer Richtung zu dem Verbindungsteil gerichteten Hub erzeugt, welcher die Klemmung realisiert.

9. Sicherheitsvorrichtung zum Arretieren eines verstellbaren Anschlussteils nach einem der vorstehend genannten Ansprüche, **dadurch gekennzeichnet,**
**dass** das Lagerteil (1) des zweiten Klemmmechanismus als Joch ausgebildet ist, so dass die Spindel (10) axial (12) und radial (13) geführt ist.

10. Sicherheitsvorrichtung zum Arretieren eines verstellbaren Anschlussteils nach einem der vorstehend genannten Ansprüche, **dadurch gekennzeichnet,**
**dass** die Spindelsteigung derart bemessen ist, dass aufgrund der gewählten Spindelsteigung eine Selbsthemmung realisierbar ist.

11. Sicherheitsvorrichtung zum Arretieren eines verstellbaren Anschlussteils nach Anspruch 3, **dadurch gekennzeichnet,**
**dass** das Anschlussteil (2) ein Mantelrohr einer Lenksäule eines Kraftfahrzeuges mit einem angeschweißten U-förmigen Träger ist, welcher an jedem Schenkel ein Durchgangsloch zur Verbindung mit dem als Verbindungsbolzen ausgeführten Verbindungsstück (3) aufweist.

## Claims

1. Safety device for locking an adjustable connection part, in particular an enclosing tube of a steering column of a motor vehicle, comprising at least one first bearing part (1), which has at least one through-opening (1a) for guiding a connecting piece (3) that connects at least two mutually movable clamping parts (4, 7) to one another, which clamp the connection part (2), wherein the connecting piece (3) and the clamping parts (4, 7) form a first clamping mechanism and means of securing the clamping mechanism are further provided,
**characterized in**
**that** the means of securing the first clamping mechanism (3, 4, 7) comprises a second clamping mechanism (10, 11), which is situated between the clamping parts (4, 7) of the first clamping mechanism and connected to the first clamping mechanism, wherein the second clamping mechanism comprises at least one second bearing part (11), which has a through-opening (11a) that is at least congruent with the through-opening (1a) of the first bearing part (1), and a spindle (10), which is connected by a clamping part (4) of the first clamping mechanism (3, 4, 7) in the form of a spindle nut to the first clamping mechanism (3, 4, 7), so that both clamping mechanisms (3, 4, 7; 10, 11) are releasable or lockable by means of the first clamping mechanism (3, 4, 7).

2. Safety device for locking an adjustable connection part according to claim 1, **characterized in**
**that** the first bearing part (1) takes the form of a bracket, which is designed with a U-shaped part and the limbs of which each have an oblong hole for receiving a connection part (2) via a fastening device (2a).

3. Safety device for locking an adjustable connection part according to claim 1, **characterized in**
**that** the connecting piece (3) is a clamping pin with a head designed as a spindle nut.

4. Safety device for locking an adjustable connection part according to one of the preceding claims, **characterized in**
**that** the longish through-opening (1a) of the first bearing is an oblong hole extending in adjusting direction.

5. Safety device for locking an adjustable connection part according to one of the preceding claims, **characterized in**
**that** a clamping part (7) is designed as a multipart clamping part with a lever (9).

6. Safety device for locking an adjustable connection part according to claim 5, **characterized in**
**that** the multipart clamping parts (6, 7, 8, 9) are designed as step pulleys, wherein the lever (9) upon rotation about the axis of the connecting piece (3) in combination with the clamping parts generates a stroke, which is directed in axial direction relative to the connecting part and realizes the clamping.

7. Safety device for locking an adjustable connection part according to claim 5, **characterized in**
**that** the multipart clamping parts (6, 7, 8, 9) are designed as a needle mechanism, wherein the lever (9) upon rotation about the axis of the connecting piece (3) in combination with the clamping parts generates a stroke, which is directed in axial direction relative to the connecting part and realizes the clamping.

8. Safety device for locking an adjustable connection part according to claim 5, **characterized in**
**that** the clamping parts (6, 7, 8, 9) are designed as a thread pitch, wherein the lever (9) upon rotation about the axis of the connecting piece (3) in combination with the clamping parts generates a stroke, which is directed in axial direction relative to the connecting part and realizes the clamping.

9. Safety device for locking an adjustable connection part according to one of the preceding claims, **characterized in**
**that** the bearing part (1) of the second clamping mechanism is designed as a yoke, so that the spindle (10) is guided axially (12) and radially (13).

10. Safety device for locking an adjustable connection part according to one of the preceding claims, **characterized in**
**that** the spindle pitch is dimensioned in such a way that because of the selected spindle pitch self-locking is realizable.

11. Safety device for locking an adjustable connection part according to claim 3, **characterized in**
**that** the connection part (2) is an enclosing tube of a steering column of a motor vehicle with a welded-on U-shaped support, which has on each limb a though-hole for the connection to the connecting piece (3) in the form of a connecting pin.

## Revendications

1. Dispositif de sécurité pour bloquer un élément de raccordement réglable, en particulier un tube-corps d'une colonne de direction d'un véhicule avec au moins un premier élément de montage (1), lequel comporte au moins un orifice traversier (1a) pour guider une pièce de liaison (3) qui relie l'un à l'autre au moins deux éléments de serrage (4, 7) mobiles l'un rapport à l'autre et serrant l'élément de raccordement (2), la pièce de liaison (3) et les éléments de serrage (4, 7) formant un premier mécanisme de serrage et en outre des moyens pour la sûreté du premier mécanisme de serrage étant prévus,
**caractérisé en ce que**
les moyens pour la sûreté du premier mécanisme de serrage (3, 4, 7) incluent un deuxième mécanisme de serrage (10, 11) se trouvant entre les éléments de serrage (4, 7) du premier mécanisme de serrage et couplé à celui-ci, le deuxième mécanisme de serrage comprenant au moins un deuxième élément de montage (11), lequel comporte un orifice traversier (11a) au moins congruent à l'orifice traversier (1a) du premier élément de montage (1), et une broche (10) qui est reliée au premier mécanisme de serrage (3, 4, 7) par un élément de serrage (4) du premier mécanisme de serrage (3, 4, 7) formé comme un écrou de broche de sorte que les deux mécanismes de serrage (3, 4, 7 ; 10, 11) sont détachables ou blocables au moyen du premier mécanisme de serrage (3, 4, 7).

2. Dispositif de sécurité pour bloquer un élément de raccordement réglable selon la revendication 1,
**caractérisé en ce que**,
le premier élément de montage (1) est formé comme une console réalisée avec une partie en forme de U dont les branches accueillant un élément de raccordement (2) par un dispositif de fixation (2a) comportent chacune un trou oblong.

3. Dispositif de sécurité pour bloquer un élément de raccordement réglable selon la revendication 1,
**caractérisé en ce que**,
la pièce de liaison (3) est un boulon de serrage ayant une tête conformée comme un écrou de broche.

4. Dispositif de sécurité pour bloquer un élément de raccordement réglable selon l'une des revendications précédentes, **caractérisé en ce que**,
l'orifice traversier long (1a) du premier élément de montage est un trou oblong formé suivant la direction de réglage.

5. Dispositif de sécurité pour bloquer un élément de raccordement réglable selon l'une des revendications précédentes, **caractérisé en ce que**,
un élément de serrage (7) est conformé comme un élément de serrage à plusieurs parties avec un levier (9) .

6. Dispositif de sécurité pour bloquer un élément de raccordement réglable selon la revendication 5,
**caractérisé en ce que**,
les éléments de serrage à plusieurs parties (6, 7, 8, 9) sont conformés comme des rondelles étagées, le levier (9) produisant par rotation autour de l'axe de la pièce de liaison (3) en combinaison avec les éléments de serrage une élévation dirigée suivant la direction axiale à l'élément de liaison, lequel réalise le serrage.

7. Dispositif de sécurité pour bloquer un élément de raccordement réglable selon la revendication 5,
**caractérisé en ce que**,
les éléments de serrage à plusieurs parties (6, 7, 8, 9) sont conformés comme un mécanisme à aiguilles, le levier (9) produisant par rotation autour de l'axe de la pièce de liaison (3) en combinaison avec les éléments de serrage une élévation dirigée suivant la direction axiale à l'élément de liaison, lequel réalise le serrage.

8. Dispositif de sécurité pour bloquer un élément de raccordement réglable selon la revendication 5,
**caractérisé en ce que**,
les éléments de serrage (6, 7, 8, 9) sont conformés comme un pas de filetage, le levier (9) produisant par rotation autour de l'axe de la pièce de liaison (3) en combinaison avec les éléments de serrage une élévation dirigée suivant la direction axiale à l'élément de liaison, lequel réalise le serrage.

9. Dispositif de sécurité pour bloquer un élément de raccordement réglable selon l'une des revendications précédentes, **caractérisé en ce que**,
l'élément de montage du deuxième mécanisme de serrage est conformé comme un joug de sorte que la broche (10) est guidée axialement (12) et radialement (13).

10. Dispositif de sécurité pour bloquer un élément de raccordement réglable selon l'une des revendications précédentes, **caractérisé en ce que**,
le pas de broche est déterminé de telle sorte qu'un blocage automatique est réalisable en raison du pas de broche choisi.

11. Dispositif de sécurité pour bloquer un élément de raccordement réglable selon la revendication 3,
**caractérisé en ce que**,
l'élément de raccordement (2) est un tube-corps d'une colonne de direction d'un véhicule avec un support en forme de U soudé qui comprend à chaque branche un orifice traversier pour la liaison à la pièce de liaison (3) conformée comme un boulon de serrage.
